# EUROPEAN PATENT APPLICATION

(11) **EP 2 685 057 A1**
(43) Date of publication of application: **15.01.2014**
(21) Application number: 12807822.7
(22) Date of filing: 07.03.2012
(51) Int. Cl.: F01N 3/023, F01N 9/00

(54) **MICRO-PARTICLE CAPTURING FILTER CONDITION DETECTION DEVICE**

(30) Priority: 06.07.2011 JP 2011150374
(71) Applicant: Ibiden Co., Ltd, Ogaki-shi, Gifu 503-8604 (JP)
(72) Inventor: YAMAKAWA, Takashi, Gifu 501-0695 (JP); ISHII, Yasuhiro, Gifu 501-0695 (JP); MINOURA, Daisuke, Gifu 501-0695 (JP)
(74) Representative: HOFFMANN EITLE
(86) International application number: PCT/JP2012/055867
(87) International publication number: WO 2013/005456

(57) **Abstract**

A particulate collection filter state detection device for detecting a state of a filter for collecting particulates in an exhaust gas, according to the present invention, includes first pressure detection means for detecting a first pressure produced at an upstream side of the filter on an exhaust gas flow path, second pressure detection means for detecting a second pressure produced at a downstream side of the filter on the exhaust gas flow path, and filter state determination means for determining a state of the filter, wherein the filter state determination means are composed of an operation part and a storage part, wherein values of the first and second pressures detected by the first and second pressure detection means are stored in the storage part, wherein values of the first and second pressures detected by the first and second pressure detection means are transmitted from the storage part to the operation part, and wherein a state of the filter is determined in the operation part by applying Fourier transformation to each of values of the first and second pressures and comparing spectral intensities and/or phases at a predetermined frequency obtained by the Fourier transformation, so as to conduct determination of a state of such a filter at a good precision.

## Description

### TECHNICAL FIELD

The present invention relates to a particulate collection filter state detection device, and is concerned with a particulate collection filter state detection device preferable for determining a state of a filter for collecting particulates contained in an exhaust gas flowing on an exhaust gas flow path based on pressures in front and back of such a filter.

### BACKGROUND ART

Conventionally, a system including a particulate collection filter (DPF: diesel particulate filter) composed of a porous ceramic has known for collecting C (carbon) - based particulates (PM) exhausted from a diesel engine. PM is gradually deposited on a DPF through continuous use of a diesel engine. PM deposited on a DPF is combusted at an appropriate timing to be oxidized and removed, so as to prevent cracking of the DPF or the like or leakage of the PM toward a downstream side of the DPF. Therefore, a DPF with PM deposited thereon is regenerated at an appropriate timing.

In order to measure an amount of PM deposited on a DPF to provide an appropriate timing of combustion of such PM, it is considered that a pressure sensor is provided on each of an upstream side exhaust gas flow path and a downstream side exhaust gas flow path for the DPF and each of a ratio of magnitudes of alternating current components of outputs of respective pressure sensors and a difference between direct currents components thereof is calculated (for example, see Patent Document 1).

### PRIOR ART DOCUMENTS

### PATENT DOCUMENTS

Patent Document 1: Japanese Patent Application Publication No. 60-085214

### SUMMARY OF THE INVENTION

### PROBLEMS TO BE SOLVED BY THE INVENTION

However, it is considered that a measurement system described in Patent Document 1 mentioned above is not necessarily a detection device with high precision because an error is caused in determining a state of a DPF.

The present invention is provided by taking the point(s) described above into consideration and aims to provide a particulate collection filter state detection device capable of conducting determination of a state of a filter for collecting particulates in an exhaust gas at a good precision.

### MEANS FOR SOLVING THE PROBLEM

The inventors actively studied a cause to provide an error as described above, and as a result, found out that it was exhaust pulsation of a diesel engine.

A pressure in an exhaust gas flow path greatly varies due to exhaust pulsation of a diesel engine. Herein, such a pressure includes a fundamental wave depending on a rotational frequency of an engine and includes a higher harmonic wave component of such a fundamental wave. Furthermore, a phase shift (that appears as a time deviation) is caused between a pressure at a downstream side of a DPF and a pressure at an upstream side of the DPF. Because adjustment of a phase shift (adjusting of a time deviation) between a pressure value at an upstream side of a DPF and a pressure value at a downstream side of the DPF is not conducted in a technique described in Patent Document 1, it has been difficult to conduct determination of a state of a DPF, that is, deposition of PM thereon, at a good precision, based on both pressure values.

In order to achieve an object as described above, a particulate collection filter state detection device according to the present invention is a particulate collection filter state detection device for detecting a state of a filter for collecting particulates contained in an exhaust gas flowing on an exhaust gas flow path, including first pressure detection means for detecting a first pressure produced at an upstream side of the filter on the exhaust gas flow path, second pressure detection means for detecting a second pressure produced at a downstream side of the filter on the exhaust gas flow path, and filter state determination means for determining a state of the filter, wherein the filter state determination means are composed of an operation part and a storage part, wherein values of the first and second pressures detected by the first and second pressure detection means are stored in the storage part, wherein values of the first and second pressures detected by the first and second pressure detection means are transmitted from the storage part to the operation part, and wherein a state of the filter is determined in the operation part by applying Fourier transformation to each of values of the first and second pressures and comparing spectral intensities and/or phases at a predetermined frequency obtained by the Fourier transformation.

Also, in order to achieve an object as described above, a particulate collection filter state detection device according to the present invention is a particulate collection filter state detection device for detecting a state of a filter for collecting particulates contained in an exhaust gas flowing on an exhaust gas flow path, including first pressure detection means for detecting a first pressure produced at an upstream side of the filter on the exhaust gas flow path, second pressure detection means for detecting a second pressure produced at a downstream side of the filter on the exhaust gas flow path, first Fourier transformation means for applying Fourier transformation to a value of the first pressure detected by the first pressure detection means, second Fourier transformation means for applying Fourier transformation to a value of the second pressure detected by the second pressure detection means, comparison means for comparing a spectral intensity and/or a phase at a predetermined frequency obtained by the first Fourier transformation means and a spectral intensity and/or a phase at the predetermined frequency obtained by the second Fourier transformation means, and filter state determination means for determining a state of the filter based on a comparison result provided by the comparison means.

Additionally, in the particulate collection filter state detection device as described above, the filter state determination means may estimate a deposition amount of the particulates collected by the filter based on a ratio of a spectral intensity and/or a phase at the predetermined frequency obtained by the first Fourier transformation means and a spectral intensity and/or a phase at the predetermined frequency obtained by the second Fourier transformation means.

Furthermore, the particulate collection filter state detection device as described above may include filter regeneration instruction means for instructing regeneration of the filter in a case where the deposition amount estimated by the filter state determination means reaches a predetermined amount.

Furthermore, in the particulate collection filter state detection device as described above, the filter state determination means may estimate an amount of an incombustible residue deposited on the filter, based on a change of a ratio of a spectral intensity and/or a phase at the predetermined frequency obtained by the first Fourier transformation means and a spectral intensity and/or a phase at the predetermined frequency obtained by the second Fourier transformation means from a value at an initial state of the filter to a value after conducting regeneration of the filter.

Furthermore, in the particulate collection filter state detection device as described above, the filter state determination means may determine or estimate an abnormality or a failure of the filter based on a change of a ratio of a spectral intensity and/or a phase at the predetermined frequency obtained by the first Fourier transformation means and a spectral intensity and/or a phase at the predetermined frequency obtained by the second Fourier transformation means.

Furthermore, in the particulate collection filter state detection device as described above, the predetermined frequency may be a frequency depending on a rotational frequency of an internal combustion engine.

Furthermore, in the particulate collection filter state detection device as described above, the predetermined frequency may be a fundamental frequency in a rotational frequency of an internal combustion engine.

Furthermore, in the particulate collection filter state detection device as described above, the predetermined frequency may be a frequency higher than a fundamental frequency in a rotational frequency of an internal combustion engine.

Furthermore, in the particulate collection filter state detection device as described above, it is preferable that each of a period of time for detecting the first pressure by the first pressure detection means and a period of time for detecting the second pressure by the second pressure detection means is less than a period at a fundamental frequency in a rotational frequency of an internal combustion engine.

### EFFECTS OF THE INVENTION

According to the present invention, it is possible to conduct determination of a state of a filter for collecting particulates in an exhaust gas at a good precision.

### BRIEF DESCRIPTION OF THE DRAWING

FIG. 1 is a general structural diagram of a system including a particulate collection filter state detection device that is one embodiment of the present invention.
FIG. 2 is a flowchart of one example of a control routine to be executed in a particulate collection filter state detection device that is one embodiment of the present invention.
FIG. 3 is a waveform diagram representing time series data of pressure values detected before and after FFT processing in a particulate collection filter state detection device that is one embodiment of the present invention.
FIG. 4 is a diagram for illustrating that a waveform after FFT processing with respect to a pressure at a downstream side of a filter decreases or increases relative to a waveform after FFT processing with respect to a pressure at an upstream side of the filter.
FIG. 5 is a diagram illustrating that a degree of a decrease in an FFT waveform at a downstream side of a filter relative to an FFT waveform at an upstream side of the filter is different depending on a deposition amount of PM deposited on the filter.
FIG. 6 is a diagram representing one example of a relationship between a deposition amount of PM deposited on a filter and a ratio of a spectral intensity at a pressure at a downstream side of the filter to a spectral intensity at a pressure at an upstream side of the filter.

### EMBODIMENTS FOR IMPLEMENTING THE INVENTION

In a method for detecting a deposition amount of particulates deposited on a DPF by a conventional device for regenerating a filter for an internal combustion engine disclosed in Patent Document 1 (Japanese Patent Application Publication No. 60-085214), there has been a problem that a low precision of detection of a deposition amount of particulates deposited on a DPF is provided. A factor was considered for thus providing a low precision of detection of a deposition amount of particulates. A fact was found that pressure on an exhaust gas flow path greatly changed depending on an exhaust pulsation of a diesel engine and a phase shift (that appears as a time deviation) was produced between a pressure value at an upstream side of a DPF and a pressure value at a downstream side of the DPF. However, in the above-mentioned technique described in Patent Document 1, a problem was found that a low precision of detection of a deposition amount of particulates was provided, because a pressure value at an upstream side of a DPF and a pressure value at a downstream side of the DPF, per se, were used to detect a deposition amount of particulates deposited on a DPF and a great influence of a phase shift (that appears as a time deviation) was received.

On the other hand, each of a pressure value at an upstream side of a DPF and a pressure value at a downstream side of the DPF is Fourier-transformed to obtain a spectral intensity at each frequency, so that it is possible to compare both pressures without receiving an influence of a phase shift. Furthermore, an alternating component contained in an exhaust gas is caused to decrease by a DPF, so that a spectral intensity at an identical frequency decreases between a front and a back of the DPF. It was found that there was a correlation between an intensity ratio of such spectral intensities and a deposition amount of particulates deposited on a DPF. Then, the present invention was completed by finding an effect that each of a pressure value at an upstream side of a DPF and a pressure value at a downstream side of the DPF is Fourier-transformed to obtain a spectral intensity at each frequency and then an intensity ratio of spectral intensities at a particular frequency, so that it is possible to detect a deposition amount of particulates deposited on a DPF at a good precision based on such an intensity ratio.

Specific embodiments of a particulate collection filter state detection device according to the present invention will be described by using the drawings below.

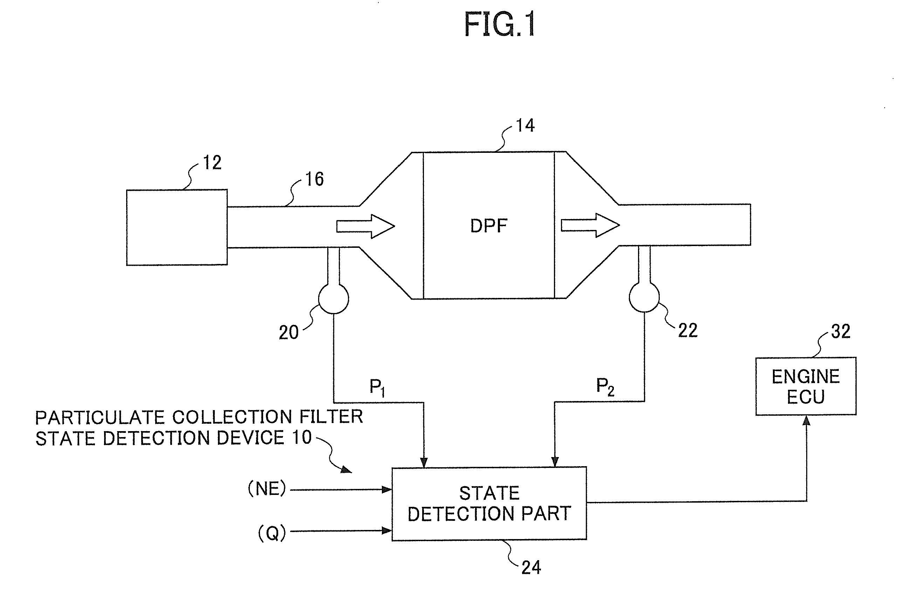

FIG. 1 illustrates a general structural diagram of a system including a particulate collection filter state detection device 10 that is one embodiment of the present invention. A system according to the present embodiment is a system intended to detect a state (specifically, a deposition amount of PM) of a particulate collection filter (DPF: Diesel Particulate Filter) 14 for collecting particulates contained in an exhaust gas exhausted from an internal combustion engine (specifically, diesel engine) 12 and regenerate the DPF 14 in a case where such a detected deposition amount of PM reaches a predetermined amount.

As illustrated in FIG. 1, a particulate collection filter state detection device 10 includes the DPF 14 provided on an exhaust gas flow path 16 connecting to the internal combustion engine 12. The DPF 14 is a filter capable of collecting PM contained in an exhaust gas exhausted from the internal combustion engine 12. Furthermore, the particulate collection filter state detection device 10 includes a pair of pressure sensors 20 and 22 provided on the exhaust gas flow path 16. Additionally, it is desirable that the pressure sensors 20 and 22 are arranged and provided at positions where an influence of a dynamic pressure that changes depending on a density and a flow rate of an exhaust gas is a minimum, that is, positions where it is possible to measure a static pressure that changes depending on, mainly, a pressure loss in front of a measurement position.

The pressure sensor 20 is a sensor for outputting an electric signal (voltage signal) depending on a pressure (upstream side pressure) produced at an upstream side of the DPF 14 on the exhaust gas flow path 16. Furthermore, the pressure sensor 22 is a sensor for outputting an electric signal (voltage signal) depending on a pressure (downstream side pressure) produced at a downstream side of the DPF 14 on the exhaust gas flow path 16. The pressure sensor 20 and the pressure sensor 22 will be referred to as an upstream side pressure sensor 20 and a downstream side pressure sensor 22, respectively, below. Each of the upstream side pressure sensor 20 and the downstream side pressure sensor 22 is connected to a state detection part 24 that is principally composed of a microcomputer. Each of an output signal from the upstream side pressure sensor 20 and an output signal from the downstream side pressure sensor 22 is supplied to the state detection part 24.

The state detection part 24 detects an upstream side pressure P1 produced at an upstream side of the DPF 14 based on an output signal from the upstream side pressure sensor 20 and detects a downstream side pressure P2 produced at a downstream side of the DPF 14 based on an output signal from the downstream side pressure sensor 22. Pressure detection due to such a state detection part 24 is conducted at each predetermined sampling time (for example, 500 µs), that is, a predetermined sampling frequency (for example, 2 kHz).

Additionally, the predetermined sampling time described above is less than a period at a fundamental frequency f0 in a rotational frequency NE of the internal combustion engine 12. Furthermore, such a fundamental frequency f0 is a frequency determined by a value of a rotational frequency NE of the internal combustion engine, and is a lower frequency in a case where the rotational frequency NE is smaller or a higher frequency in a case where the rotational frequency NE is larger. For example, in a case where the internal combustion engine is an in-line four cylinder and four stroke engine, gas exhaustion from such an internal combustion engine 12 is provided two times per one revolution thereof and pulsation of an exhaust gas pressure is provided two times per one revolution thereof, so that pulsation of gas exhaustion of 2000/min is generated at 1000 rpm, wherein a frequency of pulsation corresponding to a rotational frequency NE of an engine is 33.3 Hz and a fundamental frequency f0 is 33.3 Hz. Additionally, it is preferable for the predetermined sampling time described above to be less than a period (10 ms) at a fundamental frequency f0 that is an upper limit for conducting pressure detection in a rotational frequency NE of the internal combustion engine 12 (for example, 100 Hz when an upper limit for conducting pressure detection in a rotational frequency of the internal combustion engine 12 that is an in-line four cylinder and four stroke engine is 3000 rpm). As will be described in detail below, the state detection part 24 executes arithmetic processing of the above-mentioned detected upstream side pressure P1 and downstream side pressure P2 and calculation of a deposition amount M of PM deposited on the DPF 14.

Furthermore, each of a signal indicating a rotational frequency NE of the internal combustion engine 12 and a signal indicating an amount of exhaust air Q of the internal combustion engine 12 is supplied to the state detection part 24. The state detection part 24 detects the rotational frequency NE and the amount of exhaust air Q of the internal combustion engine 12. Additionally, a time deviation is produced between a rotational frequency NE and a pressure waveform, so that it is preferable to correct and use such a shift.

A system in the present practical example also includes an electrical control unit for an engine (that will be referred to as an engine ECU) 32 for executing each kind of control of the internal combustion engine 12. The state detection part 24 described above is connected to the engine ECU 32. The state detection part 24 determines whether or not a calculated deposition amount M of PM on the DPF 14 reaches a predetermined amount, and as a result of such determination, supplies an instruction for regenerating the DPF 14 to the engine ECU 32 in a case where a deposition amount of PM reaches a predetermined amount. As the engine ECU 32 receives an instruction for regenerating the DPF 14 from the state detection part 24, a process for regenerating the DPF 32 (for example, a process for accelerating combustion in the internal combustion engine 12 to heat the DPF 32) is conducted.

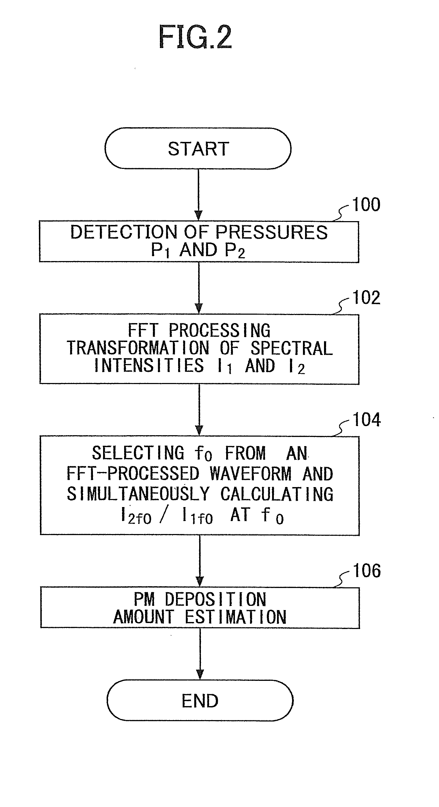

Next, a detection process in the particulate collection filter state detection device 10 according to the present embodiment will be described with reference to FIG. 2 - FIG. 6.

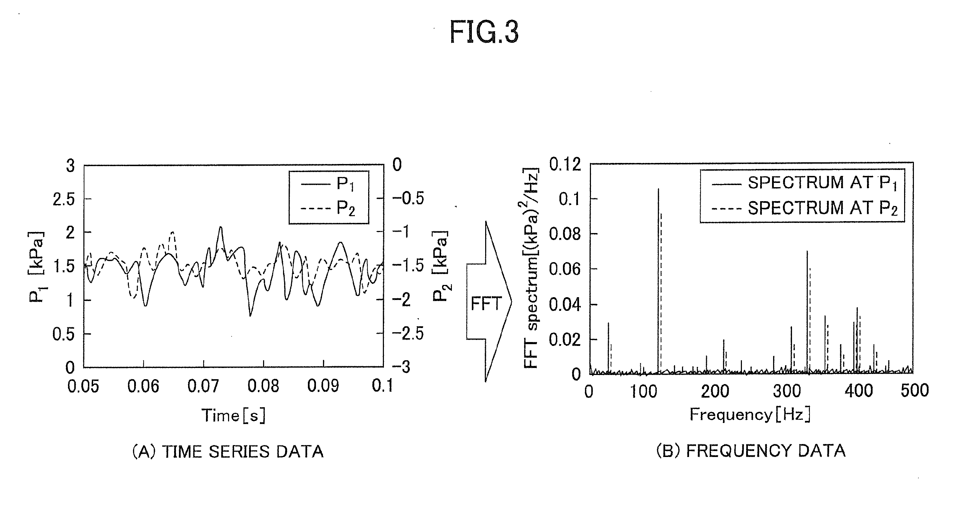

FIG. 2 illustrates a flowchart of one example of a control routine to be executed by the state detection part 24 in the particulate collection filter state detection device 10 that is one embodiment of the present invention. FIG. 3(A) illustrates a waveform diagram representing time series data of detected pressure values P1 and P2 before the state detection part 24 in the particulate collection filter state detection device 10 that is one embodiment of the present invention applies an FFT (Fast Fourier Transform) process to detected pressure values P1 and P2. FIG. 3(B) illustrates a waveform diagram representing frequency data of a spectral intensity after the state detection part 24 in the particulate collection filter state detection device 10 that is one embodiment of the present invention applies an FFT (Fast Fourier Transform) process to detected pressure values P1 and P2.

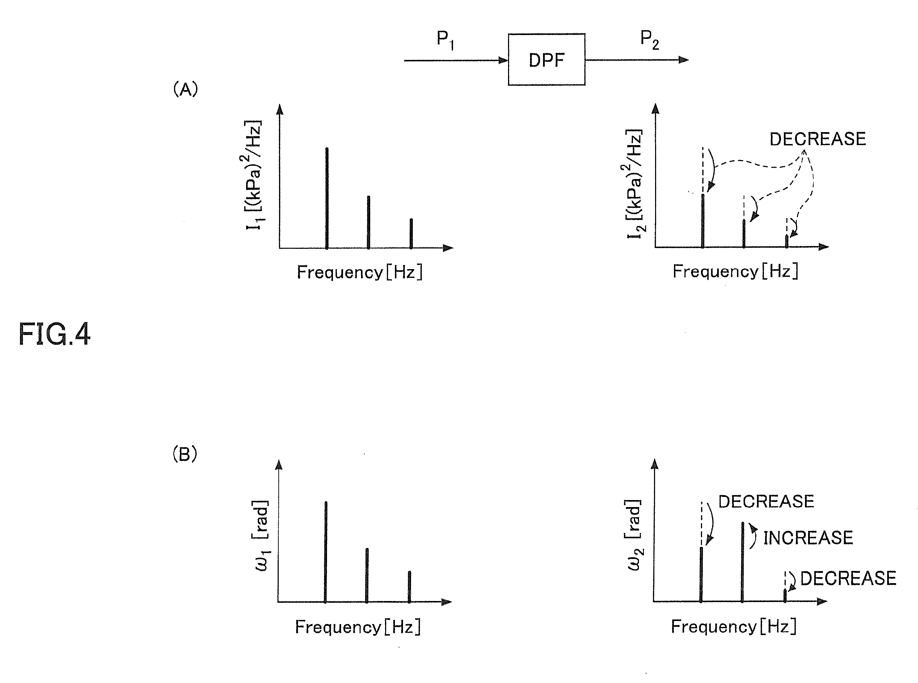

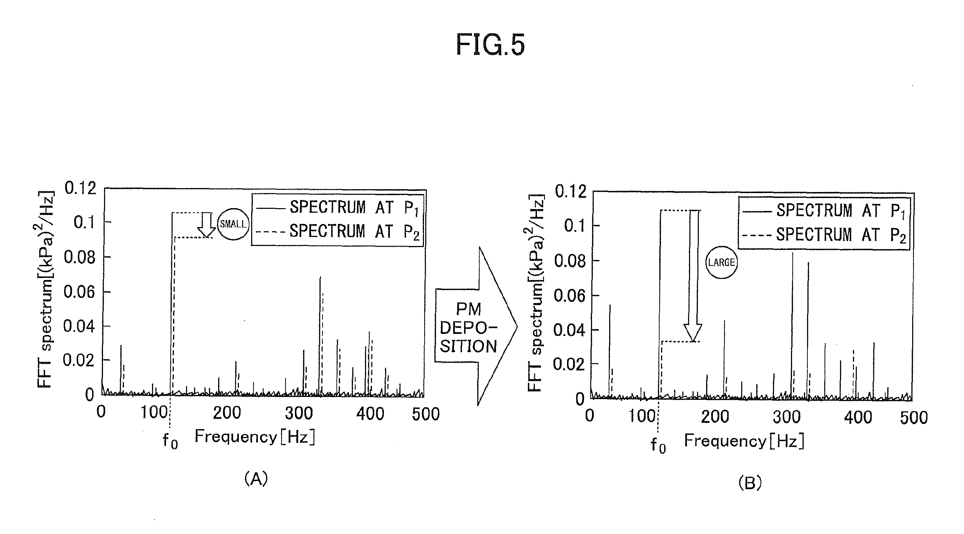

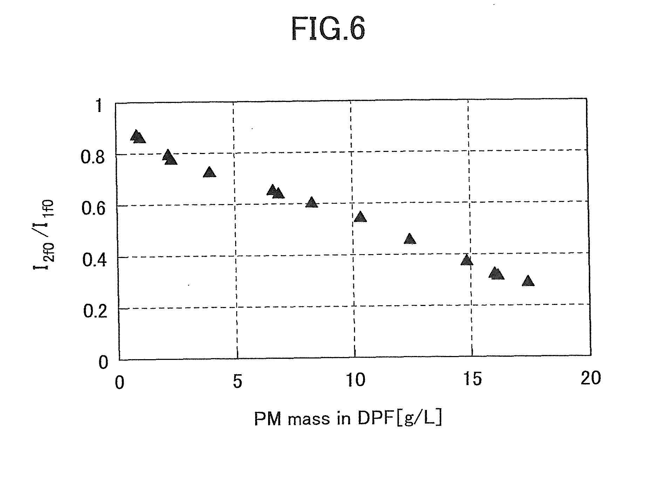

FIG. 4(A) illustrates a diagram for illustrating that a spectral intensity [(kPa)²/Hz] after an FFT process of a pressure at a downstream side of the DPF 14 decreases relative to a spectral intensity [(kPa)²/Hz] after an FFT process of a pressure at an upstream side of the DPF 14. FIG. 4(B) illustrates a diagram for illustrating that a phase [rad] after an FFT process of a pressure at a downstream side of the DPF 14 decreases or increases relative to a phase [rad] after an FFT process of a pressure at an upstream side of the DPF 14. FIGS. 5(A) and (B) illustrate a diagram illustrating that a degree of a decrease in an FFT waveform at a downstream side of the DPF 14 relative to an FFT waveform at an upstream side of the DPF 14 is different depending on a deposition amount of PM deposited on the DPF 14. Furthermore, FIG. 6 illustrates a diagram representing one example of a relationship between a deposition amount of PM deposited on the DPF 14 and a ratio of a spectral intensity at a pressure at a downstream side of the DPF 14 to a spectral intensity at a pressure at an upstream side of the DPF 14.

In the present embodiment, the state detection part 24 detects an upstream side pressure P1 [kPa] produced at an upstream side of the DPF 14 based on an output signal from the upstream side pressure sensor 20 and detects a downstream side pressure P2 [kPa] produced at a downstream side of the DPF 14 based on an output signal from the downstream side pressure sensor 22, at each predetermined sampling time (step 100). Then, each of data of an upstream side pressure value P1 and a downstream side pressure P2 is stored in a memory during a predetermined time (for example, 10 seconds or the like).

The state detection part 24 applies an FFT process to a detected upstream side pressure value P1 based on the upstream side pressure value P1 during a predetermined time stored as described above to transform such an upstream side pressure value P1 into a spectral intensity I1 [(kPa)²/Hz] for each frequency and applies an FFT process to a detected downstream side pressure value P2 based on the downstream side pressure value P2 during a predetermined time stored as described above to transform such a downstream side pressure value P2 into a spectral intensity I2 [(kPa)²/Hz] for each frequency (step 102; see FIG. 3). As such transformation is executed, each of an upstream side pressure value P1 and a downstream side pressure value P2 where pulsation depending on a rotational frequency NE of an engine is caused is separated into such a phase and a component.

The state detection part 24 detects and selects a fundamental frequency f0 from a spectral intensity after an FFT process as described above. Specifically, a fundamental frequency f0 is provided as a frequency where a spectral intensity among spectral intensities after an FFT process is a maximum value. Additionally, a fundamental frequency f0 is uniquely determined depending on a rotational frequency NE of the internal combustion engine 12 and a kind of such an internal combustion engine 12. A fundamental frequency f0 is a lower frequency for a smaller rotational frequency NE or a higher frequency for a larger rotational frequency NE.

Furthermore, as another method for obtaining a fundamental frequency f0, (1) a fundamental frequency f0 may be provided as a frequency that is four times as large as a lowest frequency where a predetermined or greater spectral intensity among spectral intensities after an FFT process appears when the internal combustion engine 12 is an in-line four cylinder and four stroke engine or (2) based on a detected rotational frequency NE of the internal combustion engine 12, a fundamental frequency f0 of pulsation depending on such a rotational frequency NE may be obtained. In such a case, when the internal combustion engine 12 is an in-line four cylinder and four stroke engine and a rotational frequency NE is 2000 rpm, a fundamental frequency f0 is set at 66.67 Hz.

The state detection part 24 calculates respective spectral intensities I1 and I2 and a fundamental frequency f0 after an FFT process as described above, then extracts spectral intensities I1_{f0} and I2_{f0} at such a fundamental frequency f0, and compares such spectral intensities I1_{f0} and I2_{f0} at the fundamental frequency f0. Specifically, a ratio I2_{f0}/I1_{f0} of the spectral intensities at a fundamental frequency f0 (that will be referred to as an intensity ratio, below) is calculated (step 104). Then, a deposition amount M [g/1] of PM deposited on the DPF 14 is estimated based on such an intensity ratio I2_{f0}/I1_{f0} (step 106).

The state detection part 24 preliminarily stores a relationship between a deposition amount of PM on the DPF 14 and a spectral intensity ratio (an intensity ratio) I2_{f0}/I1_{f0}. At the above-mentioned step 106, the state detection part 24 estimates a deposition amount M of PM deposited on the DPF 14 based on an intensity ratio I2_{f0}/I1_{f0} at a fundamental frequency f0 calculated at the above-mentioned step 104 with reference to a relationship between a stored deposition amount of PM and an intensity ratio I2_{f0}/I1_{f0}.

Additionally, the state detection part 24 may apply a correction for estimating a deposition amount M of PM depending on an initial pressure loss ΔP or an amount of exhaust air of the DPF 14 (that, additionally, may be an average value during a predetermined time for storing data of pressures P1 and P2). For example, an intensity ratio I2_{f0}/I1_{f0} is changed depending on a magnitude of a pressure loss ΔP even at an identical rotational frequency NE, that is, an identical fundamental frequency f0, specifically, is smaller for a larger pressure loss ΔP, so that, for example, an intensity ratio I2_{f0}/I1_{f0} may be corrected to be a smaller value for a larger pressure loss ΔP in order to estimate a deposition amount M of PM based on an intensity ratio I2_{f0}/I1_{f0} at a fundamental frequency f0.

Thus, in the particulate collection filter state detection device 10 according to the present practical example, each of an upstream side pressure P1 and a downstream side pressure P2 in front and back of the DPF 14 is sampled during each predetermined sampling time, an FFT process is applied to data of such pressure values P1 and P2, spectral intensities I1_{f0} and I2_{f0} at a fundamental frequency f0 depending on a rotation frequency NE of the internal combustion engine 12 are compared to calculate a ratio of such spectral intensities (an intensity ratio) I2_{f0}/I1_{f0}, and a deposition amount M of PM deposited on the DPF 14 is estimated based on such a calculated intensity ratio I2_{f0}/I1_{f0}.

A pressure difference ΔP (=P1-P2) between an upstream side and a downstream side of the DPF 14 is produced by an exhaust gas passing through the DPF 14. Such a pressure difference ΔP is a pressure loss due to presence of the DPF 14 and is changed depending on a gas flow rate, temperature, or the like. Furthermore, a pressure of an exhaust gas greatly varies due to exhaust pulsation of the internal combustion engine 12 and includes a component of a fundamental frequency f0 depending on a rotational frequency NE of the internal combustion engine 12 and a higher harmonic wave component for such a fundamental frequency f0. Furthermore, an amplitude of pulsation decreases between a front and a back of the DPF 14 in a process for passing an exhaust gas through the DPF 14 and a spectral intensity at an identical frequency decreases between a front and a back of the DPF 14 (see FIG. 5). Such an intensity ratio is changed depending on a deposition amount of PM on the DPF 14 and is smaller for a larger deposition amount thereof (see FIG. 6 and FIG. 7). That is, a spectral intensity at a downstream side of the DPF 14 for a larger deposition amount of PM is less than a spectral intensity at an upstream side of the DPF 14.

Therefore, in the particulate collection filter state detection device 10 according to the present practical example, an intensity ratio of spectral intensities I1 and I2 obtained by FFT-processing respective pressure values P1 and P2 in a front and a back of the DPF 14 (specifically, an intensity ratio I2_{f0}/I1_{f0} of spectral intensities I1_{f0} and I2_{f0} at a fundamental frequency f0) is used for estimating a deposition amount of PM on the DPF 14 for collecting PM in an exhaust gas, so that it is possible to eliminate a phase shift between pressures in a front and a back of the DPF 14 that appears as a time deviation and it is possible to estimate an deposition amount of PM on the DPF 14 for collecting PM in an exhaust gas at a good precision.

In a system according to the present practical example, the state detection part 24 estimates a deposition amount M of PM on the DPF 14 as described above, and then, determines whether or not such a deposition amount M of PM reaches a predetermined amount. Additionally, such a predetermined amount is a lower limit value of a value capable of causing leakage of PM from the DPF 14 to a downstream side thereof and is preliminarily provided. In a case where the state detection part 24 determines that an estimated deposition amount M of PM reaches a predetermined amount, an instruction for regenerating the DPF 14 is provided to the engine ECU 32. As such a process is conducted, the DPF 14 is heated, so that such PM deposited on the DPF 14 is combusted and removed. Therefore, it is possible for a system according to the present practical example to conduct regeneration of the DPF 14 with PM deposited thereon at a good timing just before a maximum collection amount of PM is deposited on the DPF 14 (additionally, such a maximum collection amount is an amount where a crack is not produced on the DPF 14 at time of combustion of PM) and it is possible to facilitate repeated utilization of the DPF 14.

Furthermore, it is possible to obtain more detailed information such as a fine crack or a change of a trace amount of PM on the DPF 14 by comparing phase waveforms after an FFT process with respect to an upstream side pressure value P1 and a downstream side pressure value P2 on the DPF 14. As illustrated in FIG. 4(B), a phase has a peak at a frequency that is an identical to a peak frequency of a spectral intensity and is changed between an upstream side and a downstream side of the DPF 14. Whereas a spectral intensity decreases from an upstream side to a downstream side of the DPF 14, a phase may increase, so that it is possible to estimate a state of the DPF 14 from a decreasing rate or an increasing rate of a phase.

Meanwhile, in the above-mentioned embodiment, the DPF 14, the state detection part 24 detecting an upstream side pressure P1 produced at an upstream side of the DPF 14 based on an output signal from the upstream side pressure sensor 20, the state detection part 24 detecting a downstream side pressure P2 produced at a downstream side of the DPF 14 based on an output signal from the downstream side pressure sensor 22, the state detection part 24 applying an FFT process to an upstream side pressure value P1, the state detection part 24 applying an FFT process to a downstream side pressure value P2, the state detection part 24 calculating an intensity ratio I2_{f0}/I1_{f0} of spectral intensities at a fundamental frequency f0 after an FFT process, the state detection part 24 estimating a deposition amount M of PM deposited on the DPF 14 based on an intensity ratio I2_{f0}/I1_{f0} of spectral intensities at a fundamental frequency f0, and the state detection part 24 providing an instruction for regeneration of the DPF 14 to the engine ECU 32 to heat the DPF 14 in a case where the state detection part 24 determines that a deposition amount M of PM reaches a predetermined amount, correspond to a "filter" recited in the claims, "first pressure detection means" recited in the claims, "second pressure detection means" recited in the claims, "first Fourier transformation means" recited in the claims, "second Fourier transformation means" recited in the claims, "comparison means" recited in the claims, "filter state determination means" recited in the claims, and "filter regeneration instruction means" recited in the claims, respectively.

Although preferred embodiments of the present invention have been described above, the present invention is not limited to such particular embodiments and it is possible to provide various variations or modifications within the essence recited in the claims.

For example, although a deposition amount of PM deposited on the DPF 14 is estimated based on an intensity ratio I2_{f0}/I1_{f0} of spectral intensities at a fundamental frequency f0 after an FFT process for pressure values P1 and P2 in a front and a back of the DPF 14 in the above-mentioned embodiment, the present invention is not limited thereto, and an amount of an incombustible residue that is composed of a metal deposited on the DPF 14 (that is, a deposition amount of Ash) may be estimated based on an intensity ratio I2_{f0}/I1_{f0} of spectral intensities at a fundamental frequency f0 after an FFT process for pressure values P1 and P2 in a front and a back of the DPF 14.

That is, although an incombustible residue is not deposited at an initial state of the DPF 14, such an incombustible residue is gradually deposited on the DPF 14 when use of the DPF 14 is continued. Such an incombustible reside is not removed even when the DPF 14 is regenerated by heating. Furthermore, an intensity ratio I2_{f0}/I1_{f0} of spectral intensities at a fundamental frequency f0 after an FFT process for pressure values P1 and P2 is greatly changed depending on whether an incombustible residue is deposited or not deposited on the DPF 14. Therefore, when an intensity ratio I2_{f0}/I1_{f0} of spectral intensities at a fundamental frequency f0 after an FFT process for pressure values P1 and P2 is stored at an initial state of the DPF 14, an intensity ratio I2_{f0}/I1_{f0} of spectral intensities at a fundamental frequency f0 after an FFT process for pressure values P1 and P2 is calculated after regeneration of the DPF 14 is conducted, so that it is possible to estimate an amount of an incombustible residue deposited on the DPF 14 based on a change from a value of an intensity ratio I2_{f0}/I1_{f0} at an initial state of the DPF 14 to a value thereof after regeneration of the DPF 14 is conducted. For example, when an amount of a change from an intensity ratio I2_{f0}/I1_{f0} at an initial state of the DPF 14 to an intensity ratio I2_{f0}/I1_{f0} after regeneration of the DPF 14 is conducted is larger, it is possible to determine that an amount of an incombustible residue deposited on the DPF 14 is larger.

Additionally, the above-mentioned estimation of an amount of an incombustible residue on the DPF 14 may be conducted just after a deposition amount M of PM deposited on the DPF 14 reaches a predetermined amount in the above-mentioned embodiment to heat and regenerate such a DPF 14. Furthermore, a method different from the above-mentioned embodiment may be conducted just after the DPF 14 is regenerated.

Furthermore, although a deposition amount of PM deposited on the DPF 14 is estimated based on an intensity ratio I2_{f0}/I1_{f0} of spectral intensities at a fundamental frequency f0 after an FFT process for pressure values P1 and P2 in a front and a back of the DPF 14 in the above-mentioned embodiment, the present invention is not limited thereto, and an abnormality or a failure of the DPF 14 may be determined or estimated based on an intensity ratio I2_{f0}/I1_{f0} of spectral intensities at a fundamental frequency f0 after an FFT process for pressure values P1 and P2 in a front and a back of the DPF 14.

That is, when the DPF 14 is at a normal state, an intensity ratio I2_{f0}/I1_{f0} of spectral intensities at a fundamental frequency f0 after an FFT process for pressure values P1 and P2 is changed (reduced) in a predetermined range, with deposition of PM or an incombustible residue on such a DPF 14 or the like. On the other hand, if abnormality or a failure is caused on the DPF 14, an intensity ratio I2_{f0}/I1_{f0} of spectral intensities at a fundamental frequency f0 after an FFT process for pressure values P1 and P2 is changed to be outside of the above-mentioned predetermined range. Therefore, it is possible to determine or estimate an abnormality or a failure on the DPF 14 based on a change of an intensity ratio I2_{f0}/I1_{f0} of spectral intensities at a fundamental frequency f0 after an FFT process for pressure values P1 and P2. For example, when an intensity ratio I2_{f0}/I1_{f0} of spectral intensities at a fundamental frequency f0 after an FFT process for pressure values P1 and P2 is changed to an outside of a predefined or predetermined range, it is possible to determine or estimate that an abnormality or a failure is caused on the DPF 14. Additionally, when it is determined or estimated that an abnormality or a failure is caused on the DPF 14, an alert may be provided by an alarm, blinking on or off of a lamp, lighting, or the like in order to cause a vehicle driver, a user, or an operator to know of such an abnormality or a failure.

Furthermore, although an instruction for regenerating the DPF 14 is provided from the state detection part 24 to the engine ECU 32 in the above-mentioned embodiment so as to regenerate the DPF 14, the present invention is not limited thereto, and a heating heater is provided inside or around the DPF 14 so that heating and regeneration of the DPF 14 may be attained by supplying electric power from the state detection part 24 to such a heater.

Moreover, although an intensity ratio I2_{f0}/I1_{f0} of spectral intensities at a fundamental frequency f0 in a rotational frequency NE of the internal combustion engine 12 after an FFT process for pressure values P1 and P2 in a front and back of the DPF 14 is used to determine a state of the DPF 14 in the above-mentioned embodiment or variation example, determination of a state of the DPF 14 may be conducted by using an intensity ratio I2_{f1}/I1_{f1} of spectral intensities at a particular frequency f1 that is a higher harmonic wave and is higher than such a fundamental frequency f0 without an intensity ratio I2_{f0}/I1_{f0} of spectral intensities at a fundamental frequency f0 after an FFT process for pressure values P1 and P2 in a front and a back of the DPF 14. Furthermore, determination of a state of the DPF 14 may be conducted by using an intensity ratio I2_{f2}/I1_{f2} of spectral intensities at a particular frequency f2 that is lower than such a fundamental frequency f0. Additionally, in such a case, a frequency of 0 Hz may be included in a particular frequency f2 that is lower than a fundamental frequency f0 in a rotational frequency NE of the internal combustion engine 12.

Additionally, the present international application claims the priority based on Japanese Patent Application No. 2011-150374 filed on July 6, 2011 (Heisei 23) and the entire contents of Japanese Patent Application No. 2011-150374 are incorporated by reference in the present international application.

### EXPLANATION OF LETTERS OR NUMERALS

- 10:: a particulate collection filter state detection device
- 12:: an internal combustion engine
- 14:: a DPF
- 16:: an exhaust gas flow path
- 20:: an upstream side pressure sensor
- 22:: a downstream side pressure sensor
- 24:: a state detection part
- 32:: an engine ECU

## Claims

1. A particulate collection filter state detection device for detecting a state of a filter for collecting particulates contained in an exhaust gas flowing on an exhaust gas flow path, wherein the particulate collection filter state detection device is **characterized by** comprising first pressure detection means for detecting a first pressure produced at an upstream side of the filter on the exhaust gas flow path, second pressure detection means for detecting a second pressure produced at a downstream side of the filter on the exhaust gas flow path, and filter state determination means for determining a state of the filter, wherein the filter state determination means are composed of an operation part and a storage part, wherein values of the first and second pressures detected by the first and second pressure detection means are stored in the storage part, wherein values of the first and second pressures detected by the first and second pressure detection means are transmitted from the storage part to the operation part, and wherein a state of the filter is determined in the operation part by applying Fourier transformation to each of values of the first and second pressures and comparing spectral intensities and/or phases at a predetermined frequency obtained by the Fourier transformation.

2. A particulate collection filter state detection device for detecting a state of a filter for collecting particulates contained in an exhaust gas flowing on an exhaust gas flow path, wherein the particulate collection filter state detection device is **characterized by** comprising first pressure detection means for detecting a first pressure produced at an upstream side of the filter on the exhaust gas flow path, second pressure detection means for detecting a second pressure produced at a downstream side of the filter on the exhaust gas flow path, first Fourier transformation means for applying Fourier transformation to a value of the first pressure detected by the first pressure detection means, second Fourier transformation means for applying Fourier transformation to a value of the second pressure detected by the second pressure detection means, comparison means for comparing a spectral intensity and/or a phase at a predetermined frequency obtained by the first Fourier transformation means and a spectral intensity and/or a phase at the predetermined frequency obtained by the second Fourier transformation means, and filter state determination means for determining a state of the filter based on a comparison result provided by the comparison means.

3. The particulate collection filter state detection device as claimed in claim 1 or 2, **characterized in that** the filter state determination means estimate a deposition amount of the particulates collected by the filter based on a ratio of a spectral intensity and/or a phase at the predetermined frequency obtained by the first Fourier transformation means and a spectral intensity and/or a phase at the predetermined frequency obtained by the second Fourier transformation means.

4. The particulate collection filter state detection device as claimed in claim 3, **characterized by** comprising filter regeneration instruction means for instructing regeneration of the filter in a case where the deposition amount estimated by the filter state determination means reaches a predetermined amount.

5. The particulate collection filter state detection device as claimed in claim 1 or 2, **characterized in that** the filter state determination means estimate an amount of an incombustible residue deposited on the filter, based on a change of a ratio of a spectral intensity and/or a phase at the predetermined frequency obtained by the first Fourier transformation means and a spectral intensity and/or a phase at the predetermined frequency obtained by the second Fourier transformation means from a value at an initial state of the filter to a value after conducting regeneration of the filter.

6. The particulate collection filter state detection device as claimed in claim 1 or 2, **characterized in that** the filter state determination means determine or estimate an abnormality or a failure of the filter based on a change of a ratio of a spectral intensity and/or a phase at the predetermined frequency obtained by the first Fourier transformation means and a spectral intensity and/or a phase at the predetermined frequency obtained by the second Fourier transformation means.

7. The particulate collection filter state detection device as claimed in any one of claims 1 to 6, **characterized in that** the predetermined frequency is a frequency depending on a rotational frequency of an internal combustion engine.

8. The particulate collection filter state detection device as claimed in claim 7, **characterized in that** the predetermined frequency is a fundamental frequency in the rotational frequency of the internal combustion engine.

9. The particulate collection filter state detection device as claimed in claim 7, **characterized in that** the predetermined frequency is a frequency higher than a fundamental frequency in the rotational frequency of the internal combustion engine.

10. The particulate collection filter state detection device as claimed in any one of claims 1 to 9, **characterized in that** each of a period of time for detecting the first pressure by the first pressure detection means and a period of time for detecting the second pressure by the second pressure detection means is less than a period at a fundamental frequency in a rotational frequency of an internal combustion engine.

11. The particulate collection filter state detection device as claimed in claim 7, **characterized in that** the predetermined frequency is a frequency lower than a fundamental frequency in the rotational frequency of the internal combustion engine.
